# FASCICULE DE BREVET EUROPEEN

(11) **EP 2 724 305 B1**
(45) Date de publication et mention de la délivrance du brevet: **09.08.2017**
(21) Numéro de dépôt: 12730946.6
(22) Date de dépôt: 27.06.2012
(51) Int. Cl.: G06Q 20/32, G06Q 20/06

(54) **PROCEDE DE TRANSACTION DEMATERIALISEE**
VERFAHREN FÜR DEMATERIALISIERTE TRANSAKTIONEN
METHOD OF DEMATERIALIZED TRANSACTION

(30) Priorité: 27.06.2011 FR 1155665
(43) Date de publication de la demande: 30.04.2014
(73) Titulaire: Octoplus, 75004 Paris (FR)
(72) Inventeur: DUPERRON, Philippe, F-75015 Paris (FR); CONTOUR, David, F-75003 Paris (FR); RODRIGUEZ, Emmanuel, F-75018 Paris (FR)
(74) Mandataire: Regimbeau
(86) Numéro de dépôt international: PCT/EP2012/062495
(87) Numéro de publication internationale: WO 2013/000966

(56) Documents cités:
- WO-A1-97/45814
- MJOLSNES S F ET AL: "Open transnational system for digital currency payments", SYSTEM SCIENCES, 1997, PROCEEDINGS OF THE THIRTIETH HWAII INTERNATIONA L CONFERENCE ON WAILEA, HI, USA 7-10 JAN. 1997, LOS ALAMITOS, CA, USA,IEEE COMPUT. SOC, US, vol. 5, 7 janvier 1997 (1997-01-07), pages 198-207, XP010271762, DOI: 10.1109/HICSS.1997.663175 ISBN: 978-0-8186-7743-4
- JERRY GAO ET AL: "A 2D Barcode-Based Mobile Payment System", MULTIMEDIA AND UBIQUITOUS ENGINEERING, 2009. MUE '09. THIRD INTERNATIONAL CONFERENCE ON, IEEE, PISCATAWAY, NJ, USA, 4 juin 2009 (2009-06-04), pages 320-329, XP031561633, ISBN: 978-0-7695-3658-3
- JAN ONDRUS ET AL: "An Assessment of NFC for Future Mobile Payment Systems", INTERNATIONAL CONFERENCE ON THE MANAGEMENT OF MOBILE BUSINESS, 2007 : ICMB 2007 ; 9 - 11 JULY 2007, TORONTO, ONTARIO, CANADA ; CONFERENCE PROCEEDINGS, IEEE COMPUTER SOCIETY, LOS ALAMITOS, CALIF. [U.A.], 1 juillet 2007 (2007-07-01), pages 43-43, XP031119417, ISBN: 978-0-7695-2803-8
- Konrad Wrona ET AL: "Mobile Payments - State of the Art and Open Problems" In: "Electronic Commerce", 1 janvier 2001 (2001-01-01), Springer Berlin Heidelberg, Berlin, Heidelberg, XP055016387, ISBN: 978-3-54-042878-7 vol. 2232, pages 88-100, abrégé chapitre 2
- ECMA INTERNATIONAL STANDARDIZING INFORMATION AND COMMUNICATION SYSTEMS: "Near Field Communication (NFC)", 20021001 , no. ECMA/TC32-TG19 1 octobre 2002 (2002-10-01), pages 1-9, XP002566299, Extrait de l'Internet: URL:http://www.ecma-international.org/acti vities/Communications/2002tg19-010.pdf [extrait le 2010-01-28]
- DOMINICI F ET AL: "NAV/COM Hybrid Architecture for Innovative Location Based Payment Systems", CONSUMER COMMUNICATIONS AND NETWORKING CONFERENCE, 2009. CCNC 2009. 6TH IEEE, IEEE, PISCATAWAY, NJ, USA, 10 janvier 2009 (2009-01-10), pages 1-5, XP031425635, ISBN: 978-1-4244-2308-8

## Description

### DOMAINE TECHNIQUE GENERAL

La présente invention concerne un procédé sécurisé de transaction dématérialisée pour effectuer des transactions financières ou non financières mettant en jeu un serveur, un terminal d'émetteur d'une valeur et un terminal de receveur de la valeur.

Elle concerne également des produits programmes d'ordinateurs correspondants, ainsi qu'un système pour mettre en oeuvre un tel procédé.

### CONTEXTE DE L'INVENTION

Les transactions, par exemple les transferts de valeur de compte à compte, dans le monde physique sont généralement de deux types : d'une part réalisées au moyen de monnaies scripturales, et d'autre part réalisées au moyen de titres et de cartes prépayés.

Dans le cas de l'utilisation de monnaies scripturales, deux moyens sont communément utilisés :
- Chèques (ou ordres de virements papier) : ceux-ci ont l'avantage d'être acceptables par tout le monde et ne nécessitent pas la présence physique du receveur lors de leur utilisation (ils peuvent par exemple être envoyés par la poste ou laissés sur la table d'un restaurant comme de la monnaie fiduciaire). Néanmoins, ils souffrent d'un certain nombre d'inconvénients qui limitent leur utilisation :
   - La disponibilité des fonds n'est pas vérifiable par le receveur d'où un manque de confiance de ce dernier;
   - La disponibilité des fonds n'est pas non plus directement vérifiable par l'émetteur qui doit trouver un autre moyen de consulter son compte;
   - Le titre n'est usuellement lié qu'à un compte (pas d'intérêt à lier plusieurs comptes à partir du moment ou le solde de ces comptes n'est pas consultable, et en raison du caractère figé du format du chèque papier).
- Carte de paiement : la présence des fonds peut être vérifiée en temps réel (à la demande du terminal ou de la carte) au moment du paiement, assurant ainsi au receveur une sécurité certaine d'être payé. Mais le système est lourd à mettre en oeuvre :
   - il nécessité une connexion au moment de la transaction pour la vérification de la disponibilité des fonds,
   - il nécessite la présence physique du receveur équipé de son terminal acquéreur au moment de la transaction ou d'un système automatisé permettant d'afficher le montant à payer par l'émetteur, ce montant étant contrairement au chèque toujours renseigné par le receveur ou son système.
- Les autres procédés scripturaux (virements et prélèvements) sont moins utilisés dans le monde physique et souffrent des mêmes défauts :
   - Ordres de virements / prélèvements papier : pas de vérification de la disponibilité des fonds au moment de la transaction.
   - Ordres de virements / prélèvements électronique : nécessité d'une connexion.

Dans le cas de titres et cartes prépayés, deux types de support sont communément utilisés :
- Support électronique (carte ou titre dématérialisé) : le fonctionnement est comparable au système des cartes de paiement avec une connexion pour vérifier l'approvisionnement du compte prépayé ou la validité de la carte (avec les mêmes inconvénients)
- Support papier : les « bons d'achats » ou « titres prépayés » d'un montant fixe imprimé sur un support papier généralement sécurisé pour empêcher la fraude. Ce titre répond alors aux mêmes modes de fonctionnement que la monnaie fiduciaire mais dans un réseau généralement limité. Le receveur a l'assurance de l'authenticité du titre (assurée par les éléments de sécurité des papiers utilisés) et est remboursé par l'émetteur du titre en en faisant la demande. Les inconvénients majeurs sont :
   - pour l'émetteur, le risque de perte ou vol et la manque de flexibilité (montants fixés, comptes prépayés pré-définis);
   - Pour le receveur, la lourdeur de gestion du papier (stockage, comptage, demande de remboursement...) et le délai lié au remboursement.
   - Ces procédés financiers sont également utilisés pour des transactions de biens ou de services (ou de points représentant ces biens ou services) avec les mêmes inconvénients (bons de réduction papier, cartes de fidélité, billets de spectacles).
Dans certains cas, le système carte peut-être remplacé par un autre support fonctionnant selon le même modèle : l'identifiant peut alors par exemple être codé dans un code barre ou être affiché en clair (au lieu d'être codé dans la piste de la carte ou embossé sur l'avant de la carte). Dans tous les cas la lourdeur liée au besoin de connexion pour vérifier la disponibilité des fonds ou la validité du titre subsiste.

### PRESENTATION DE L'INVENTION

L'invention propose de pallier au moins un de ces inconvénients, préférentiellement tous. A cet effet, on propose selon un premier aspect de l'invention un procédé sécurisé de transaction dématérialisée selon la revendication 1.

De préférence, c'est le terminal de receveur qui vérifie l'authenticité du droit de transaction à partir du contenu de l'ordre de transaction.

De préférence, l'opération de dénouement de la transaction est effectuée en réponse à une interaction entre le terminal de receveur et le serveur sur la base de l'ordre de transaction, et l'ordre de transaction contient une information identifiant l'émetteur et, en absence d'interaction entre le terminal de receveur et le serveur :
- l'ordre de transaction est mémorisé dans le terminal de receveur,
- l'information identifiant l'émetteur est lue à partir de l'ordre de transaction par le terminal de receveur, de manière à permettre une vérification d'identité de l'émetteur,
- l'ordre de transaction est validé ou non au moyen d'un dispositif d'entrée du terminal de receveur pour interaction ultérieure.

Alternativement, l'opération de dénouement de la transaction est effectuée en réponse à une interaction entre le terminal d'émetteur et le serveur sur la base de l'ordre de transaction, et l'ordre de transaction contient une information identifiant le receveur et, en absence d'interaction entre le terminal d'émetteur et le serveur:
- l'ordre de transaction est mémorisé dans le terminal d'émetteur,
- l'information identifiant le receveur est lue à partir de l'ordre de transaction par le terminal d'émetteur, de manière à permettre une vérification d'identité du receveur,
- l'ordre de transaction est validé ou non au moyen d'un dispositif d'entrée du terminal d'émetteur pour interaction ultérieure.

L'invention selon le premier aspect est avantageusement complétée par les caractéristiques suivantes, prises seules ou en une quelconque de leurs combinaisons techniquement possible :
- les informations permettant d'authentifier le droit de transaction comprennent une signature numérique ;
- au moins une étape du procédé a une durée de faisabilité ;
- le droit de transaction comporte une date et une heure d'émission à partir desquels est déterminée une durée de validité ;
- le montant maximal de transaction sur lequel porte le droit de transaction est bloqué au niveau du serveur jusqu'à la transmission par le terminal de receveur au serveur de l'ordre de transaction ou jusqu'à expiration d'un délai ;
- l'ordre de transaction est généré par le terminal d'émetteur puis transmis au terminal de receveur ;
- l'ordre de transaction est généré par le terminal de receveur à partir d'informations permettant d'authentifier le droit de transaction, lesdites informations étant préalablement transmises audit terminal de receveur par le terminal d'émetteur ;
- la transmission depuis le terminal d'émetteur vers le terminal de receveur est effectuée par voie optique au moyen d'un motif dans lequel est encodé le contenu de la transmission et un dispositif d'acquisition d'images du terminal de receveur ;
- le motif est affiché par un écran du terminal d'émetteur et acquis par le dispositif d'acquisition d'images du terminal de receveur ;
- le motif est imprimé pour lecture par le dispositif d'acquisition d'images, évitant ainsi le besoin de la présence du terminal d'émetteur pour la transmission au moment de la lecture ;
- la transmission depuis le terminal d'émetteur vers le terminal de receveur est effectuée par voie électromagnétique
- la transmission est effectuée par communication en champ proche (NFC pour Near Field Communication selon la terminologie anglo-saxonne) ;
- les règles à partir desquelles est généré le droit de transaction comprennent le statut d'une session de transaction à laquelle est associée la requête de droit de transaction, ladite session de transaction étant apte à prendre deux statuts :
   - le premier statut, dit ouvert, permettant de générer des droits de transaction associés à ladite session et correspondants à des requêtes de transaction associées à ladite session,
   - le second statut, dit fermé, interdisant de générer des droits de transaction associés à ladite session et s'associer des requêtes de droit de transaction à ladite session ;
- pour un même émetteur, une seule session de transaction peut avoir le premier statut ;
- la session de transaction passe du premier statut au second statut en réponse à la transmission par le terminal d'émetteur au serveur de l'ordre de transaction ;
- la session de transaction passe du premier statut au second statut à l'expiration d'un délai prédéterminé ;
- la session de transaction est associée à un compte d'émetteur depuis lequel est émise la valeur ;
- la session de transaction est identifiée par un identifiant de session de transaction prenant la forme d'une première chaîne de caractères alphanumériques,
- le droit de transaction est identifié par l'identifiant de droit de transaction prenant la forme d'une deuxième chaîne de caractères alphanumériques générée à partir de la première chaîne de caractères alphanumériques,
- l'ordre de transaction est identifié par un identifiant d'ordre de transaction prenant la forme d'une troisième chaîne de caractères alphanumériques générée à partir de la deuxième chaîne de caractères alphanumériques ;
- le serveur prend en compte des données de géolocalisation du terminal d'émetteur et/ou du terminal de receveur ;
- la transaction dématérialisée est un paiement.

L'invention concerne également les procédés respectivement mis en oeuvre dans le serveur, le terminal d'émetteur et le terminal de receveur dans le cadre du procédé sécurisé de transaction dématérialisée.

Ainsi, l'invention concerne :
- un procédé mis en oeuvre dans un serveur informatique dans le cadre du procédé sécurisé de transaction, dans lequel le serveur :
   - reçoit une requête de droit de transaction transmise depuis un terminal d'émetteur,
   - génère sélectivement un droit de transaction, correspondant à ladite requête et portant sur un montant maximal de transaction, en fonction en fonction de règles,
   - transmet ledit droit de transaction audit terminal d'émetteur,
   - reçoit un ordre de transaction depuis un terminal de receveur,
   - effectue une opération de dénouement de la transaction ;
- un procédé mis en oeuvre dans un terminal d'émetteur dans le cadre du procédé sécurisé de transaction, dans lequel le terminal d'émetteur :
   - envoie une requête de droit de transaction à un serveur informatique,
   - reçoit depuis le serveur un droit de transaction, correspondant à ladite requête et portant sur un montant maximal de transaction, généré en fonction de règles,
   - transmet des informations permettant d'authentifier le droit de transaction à un terminal de receveur, de sorte qu'un ordre de transaction est généré entre le terminal d'émetteur et le terminal de receveur ;
- un procédé mis en oeuvre dans un terminal de receveur, dans lequel le terminal de receveur :
   - reçoit depuis un terminal d'émetteur des informations permettant d'authentifier le droit de transaction à un terminal de receveur, de sorte qu'un ordre de transaction est généré entre le terminal d'émetteur et le terminal de receveur.
   - envoie l'ordre de transaction à un serveur informatique.
De préférence, en absence d'envoi de l'ordre de transaction au serveur, comme un échec d'envoi :
- l'ordre de transaction est mémorisé pour envoi ultérieur,
- une information identifiant l'émetteur est lue à partir de l'ordre de transaction, de manière à permettre une vérification d'identité,
- l'ordre de transaction est validé ou non au moyen d'un dispositif d'entrée du terminal de receveur.

Selon un second aspect, l'invention propose des produits programme d'ordinateur comprenant des instructions de code de programme pour l'exécution des étapes d'au moins un des procédés mis en oeuvre dans le serveur, le terminal d'émetteur ou dans le terminal de receveur dans le cadre d'un procédé sécurisé de transaction selon le premier aspect.

Selon un troisième aspect, l'invention propose un système sécurisé de transaction dématérialisée comprenant :
- un serveur informatique,
- un terminal d'émetteur adapté pour communiquer avec ledit serveur,
- un terminal de receveur adapté pour communiquer avec ledit serveur,
le terminal d'émetteur et le terminal de receveur comprenant des moyens permettant la transmission de l'un vers l'autre d'un ordre de transaction, afin de mettre en oeuvre un procédé sécurisé de transaction selon le premier aspect de l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels :
- la figure 1 représente une illustration d'un système selon l'invention ;
- la figure 2 représente un schéma de principe du procédé selon l'invention ;
- les figures 3a, 3b et 3c sont des diagrammes d'opérations, avec la figure 3a représentant les opérations relatives à un terminal d'émetteur, la figure 3b représentant les opérations relatives à un serveur, la figure 3c représentant les opérations relatives à un terminal de receveur ;
- la figure 4 illustre des exemples d'identifiants qui peuvent être utilisés dans le cadre de l'invention.

### DESCRIPTION DETAILLEE

Dans le cadre de la présente description, on désignera par transaction
- tout transfert de valeur d'un compte de valeur émetteur à un compte de valeur receveur (par exemple un paiement). Dans ce cas, le montant de la transaction correspond au montant de la valeur transférée. Dans ce contexte, on désignera par « ordre de transaction » un message attestant de la validité et du montant du transfert de valeur ;
- ou tout échange d'un bien ou d'un service contre un titre ayant valeur de droit à acquérir ce bien ou bénéficier de ce service (ex : un jeton pour retirer un lot, un billet donnant un droit de participation ou de présence, etc...) Dans ce cas, l'émetteur est le détenteur du titre (qui peut être enregistré sur un compte par exemple), le receveur celui qui reçoit le titre et qui est le fournisseur du bien ou du service. Dans ce cas, le montant de transaction correspond à la valeur du bien ou du service. L'« ordre de transaction » est le signal attestant que l'émetteur est bien détenteur d'un tel titre, et que le receveur doit en échange fournir le bien ou le service associé.

Une transaction peut ainsi par exemple prendre la forme d'un paiement portant sur une somme d'argent dans le cas d'un transfert d'argent ou portant sur un nombre de titres restaurants dans le cas d'un transfert de titres restaurant. La transaction peut aussi être un échange de biens physiques contre un bon d'achat de ces biens physiques dématérialisé ou bien encore contre des points de fidélité.

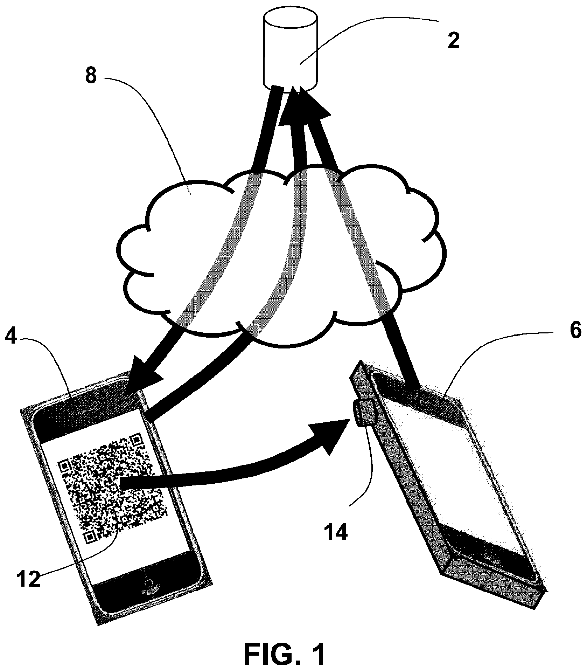

La figure 1 illustre un système apte à mettre en oeuvre le procédé de transaction selon l'invention. Ce système comporte :
- un serveur 2, de préférence apte à interagir avec la gestion de comptes ;
- un terminal d'émetteur 4 adapté pour communiquer avec ledit serveur 2, au moyen d'un réseau de communication 8 qui peut être par exemple le réseau internet Wi-Fi ou par câble, un réseau de téléphonie mobile 3G, 4G, une connexion Bluetooth® ou encore toute forme de connexion permettant un échange d'informations entre ledit terminal d'émetteur 4 et le serveur 2, voire un réseau composite mettant en oeuvre plusieurs types de connexions ;
- un terminal de receveur 6 adapté pour communiquer avec ledit serveur 2 au moyen d'un réseau de communication 8 qui peut être par exemple le réseau Internet par Wi-Fi ou par câble, un réseau de téléphonie mobile 3G, 4G, une connexion Bluetooth®, une connexion WiMax ou encore toute forme de connexion permettant un échange d'informations entre ledit terminal de receveur 6 et le serveur 2, voire un réseau composite mettant en oeuvre plusieurs types de connexions.

Le terminal d'émetteur 4 et le terminal de receveur 6 peuvent communiquer au moyen d'un même réseau, par exemple Internet, ou bien par des réseaux distincts.
Le terminal d'émetteur 4 et le terminal de receveur 6 comprennent des moyens permettant la transmission de l'un vers l'autre d'un ordre de transaction ou d'informations permettant d'authentifier un droit de transaction. Ces moyens de transmission peuvent par exemple être optiques, par ondes électromagnétiques (radio, Bluetooth®, NFC...), voire sonores, ou tout autres, dès lors qu'ils permettent une transmission entre le terminal d'émetteur 4 et le terminal de receveur 6 des données nécessaires à la réalisation de l'invention.

Dans l'exemple illustré par la figure 1, ladite transmission d'un ordre de transaction est effectuée par voie optique entre :
- un écran du terminal d'émetteur affichant un motif 12 dans lequel est encodé l'ordre de transaction par le biais de son identifiant sous la forme d'un code barre 2D mettant en oeuvre le code QR,
- un dispositif 14 d'acquisition d'image du terminal de receveur 6, par exemple un appareil photographique ou une caméra incorporée au terminal de receveur 6.
(Cette configuration peut être inversée comme on le verra dans la suite, avec un ordre de transaction émis par le terminal de receveur 6 et acquis par le terminal d'émetteur 4.)

Ainsi, l'acquisition du motif 12 par le terminal de receveur 6 au moyen du dispositif d'acquisition d'image permet la transmission de l'ordre de transaction encodé dans le motif 12.

D'autres modes de transmission peuvent être envisagés. Ainsi le motif peut par exemple être imprimé pour être lu par le dispositif 14 d'acquisition d'images du terminal de receveur 6, évitant ainsi le besoin de la présence du terminal d'émetteur 4 pour ladite transmission au moment de celle-ci.

Un autre mode de transmission peut être de prévoir des dispositifs NFC (acronyme de l'anglais Near Field Communication pour communication en champ proche) dans le terminal d'émetteur 4 et le terminal de receveur 6, pour effectuer la transmission au moyen d'ondes électromagnétiques telles que les ondes radios, de préférence avec une induction d'activation par champ magnétique.

Le terminal d'émetteur 4 prend de préférence la forme d'un dispositif mobile et portatif tel qu'un téléphone mobile intelligent. Le terminal de receveur 6 peut également être un téléphone mobile intelligent, mais peut également être un dispositif dédié, par exemple un dispositif d'un système de caisse enregistreuse muni d'un logiciel adéquat. De préférence, le terminal de receveur 6 comprend un dispositif d'entrée tel qu'un clavier ou un écran tactile, afin que le receveur puisse entrer des informations dans le terminal de receveur 6, notamment des informations de validation. Le terminal d'émetteur comporte également de préférence un tel dispositif d'entrée.

Un compte émetteur est associé à l'émetteur ou au terminal d'émetteur 4. Ce compte peut prendre différentes formes selon l'utilisation qui est faite de l'invention, par exemple (sans que cette liste soit exhaustive) :
- Un compte émetteur peut être un compte contenant de la valeur monétaire apte à être alimenté par un ou plusieurs comptes bancaires en fonction de règles de priorité et de plafonds de montants.
- Il peut aussi s'agir d'un compte de point de fidélités alimenté par plusieurs comptes de fidélité.
- Il peut aussi s'agir d'un compte contenant des droits d'accès à un service (billets de spectacles, billets de transport, ...).
Dans le cas d'une transaction impliquant un transfert de valeur, un compte receveur est associé au receveur ou au terminal de receveur 6. Un compte receveur peut être un compte apte à alimenter un ou plusieurs comptes bancaires en fonction de règles de priorité et de plafonds de montants.

Un compte émetteur comprend une provision de la valeur concernée dans le cas de l'utilisation de l'invention (par exemple des titres à valeur fixes, correspondant par exemple à des titres restaurants ou à des chèques cadeaux, une somme monétaire, un certain nombre de points de fidélité, des droits d'accès à des services, etc...).

Le compte émetteur est stocké sur une plate-forme informatique gérée ou au moins accessible par le serveur 2 informatique, qui peut ainsi interagir avec la gestion de ce compte émetteur. Le compte émetteur est associé à des autorisations de transaction mémorisées dans le serveur 2 et préexistantes à une transaction. Il s'agit donc de transactions pré-approuvées. Le compte receveur est stocké sur une plate-forme informatique gérée ou au moins accessible (en temps réel ou non) par le serveur 2 informatique, qui peut ainsi interagir avec la gestion de ce compte receveur. Lesdites plateformes sur lesquelles les comptes sont stockés peuvent être extérieures au système intégrant le serveur 2, et être par exemple intégrante d'un système bancaire avec lequel le serveur 2 est capable de communiquer, par exemple au moyen du réseau de communication 8.

Ces autorisations de transaction peuvent être contenues dans l'existence même de titres à valeur fixes provisionnés sur le compte émetteur, où chacun des titres représente une autorisation de transaction pour un montant correspondant à sa valeur fixe. Ces autorisations peuvent également prendre la forme d'un plafond de valeur en deçà duquel la transaction est autorisée.

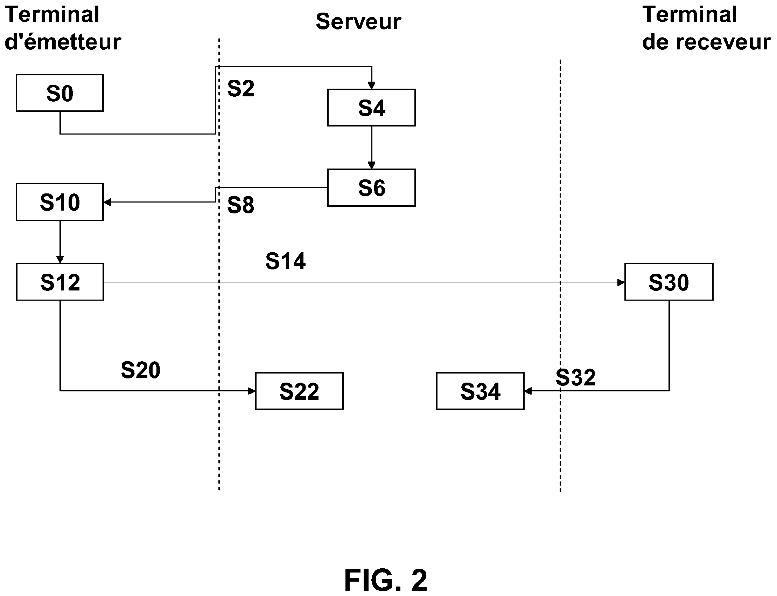

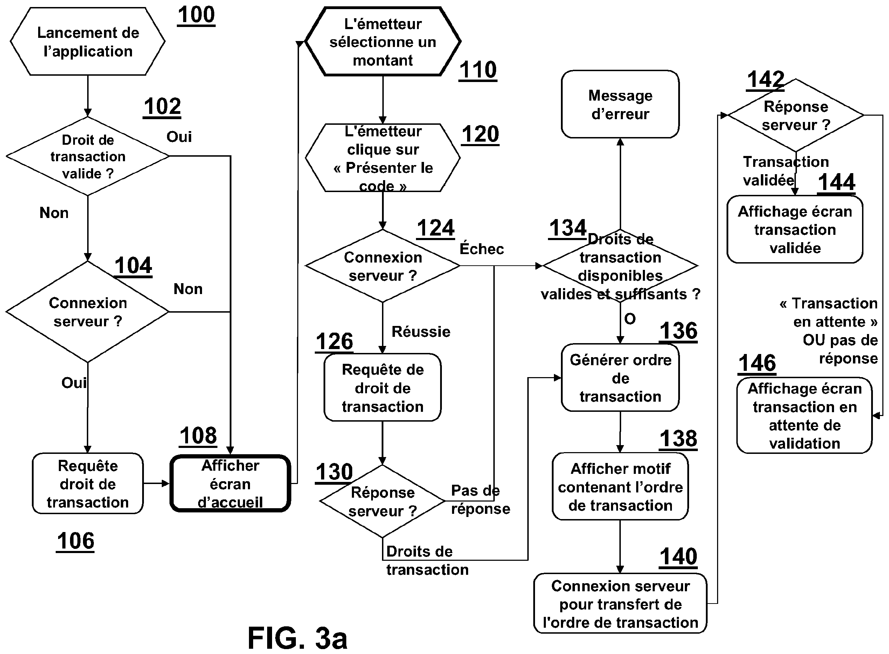

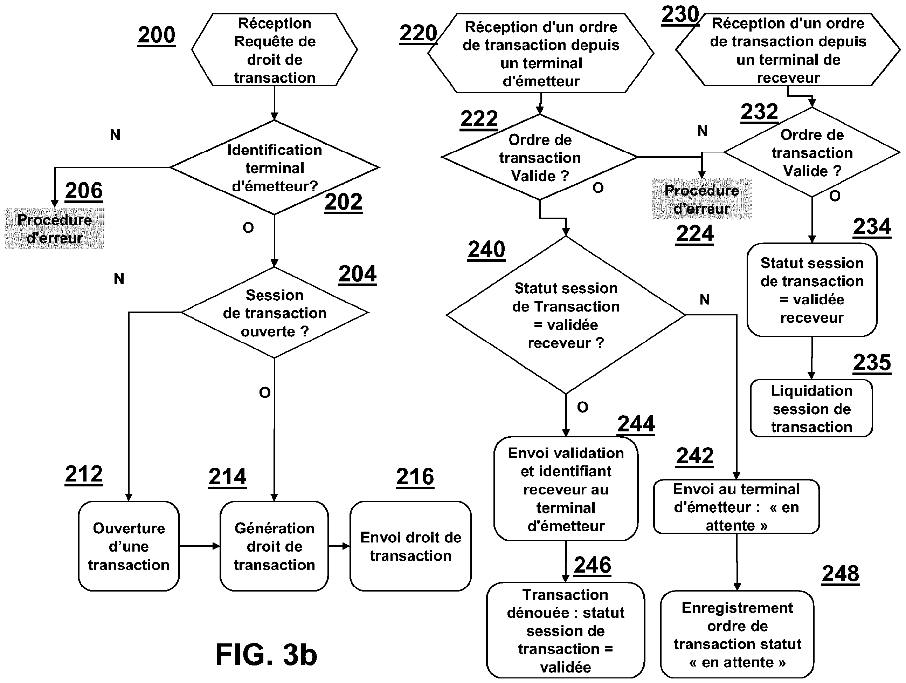

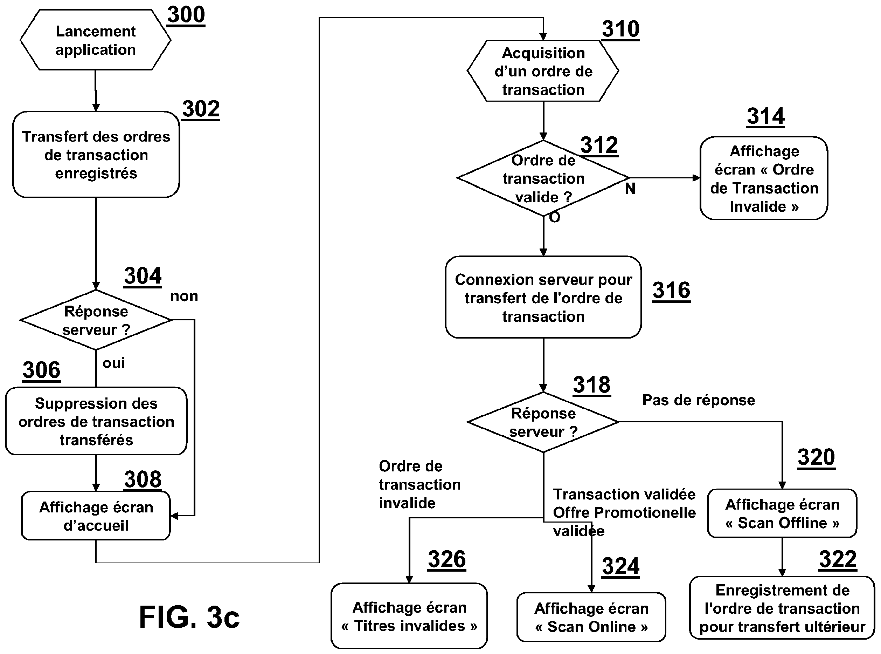

La mise en oeuvre du procédé selon l'invention va maintenant être décrite, dont un schéma de principe est illustré par la figure 2. Référence est faite également aux figures 3a, 3b et 3c qui sont des diagrammes illustrant des exemples d'opérations mises en oeuvre par les constituant du système selon l'invention.

Une requête de droit de transaction est générée S0 par le terminal d'émetteur 4. Cette requête peut être générée à la suite d'un évènement qui peut par exemple être la mise en route du terminal d'émetteur 4, le lancement 100 d'une application dédiée, l'affichage d'un écran particulier ou encore une requête expresse de l'émetteur désirant présenter un ordre de transaction.

Cette requête de droit de transaction porte sur un montant de transaction qui peut être un nombre de titres, une somme d'une valeur, ou un mélange des deux. Elle contient en outre un identifiant du terminal d'émetteur 4 qui la génère ou de toute autre information permettant au serveur 2 d'identifier l'émetteur. Elle peut également contenir d'autres informations, telle qu'une identification de l'évènement qui l'a générée (mise en route du terminal, requête de l'émetteur, ...).

La requête de droit de transaction est transmise S2 depuis le terminal d'émetteur 4 vers le serveur 2 au moyen du réseau 8. A la réception de la requête de droit de transaction par le serveur 2, celui-ci associe S4 ladite requête avec une session de transaction, ladite session de transaction étant associée au compte émetteur identifié à partir de la requête.

L'utilisation de sessions de transaction peut être omise, mais celles-ci permettent une sécurisation accrue de la transaction. Une session de transaction est ainsi apte à prendre deux statuts :
- le premier statut, dit ouvert, permettant de générer des droits de transaction associés à ladite session et correspondants à des requêtes de transaction associées à ladite session,
- le second statut, dit fermé, interdisant de générer des droits de transaction associés à ladite session et s'associer des requêtes de droit de transaction à ladite session.

S'il n'existe pas de session de transaction ouverte associée audit compte, une nouvelle session de transaction est générée par le serveur 2. S'il existe déjà une session de transaction ouverte, la requête de transaction est associée avec la requête existante.

De préférence, le serveur 2 interdit la création d'une session de transaction supplémentaire pour un compte donné s'il existe pour ce même compte émetteur une session de transaction ouverte, c'est-à-dire non fermée. Ainsi, lorsqu'existe une session de transaction ouverte associée un compte émetteur, les requêtes de droits de transactions concernant ledit compte émetteur seront toutes associées à ladite session de transaction active.

Une session de transaction est identifiée par un identifiant de session de transaction, de préférence sous la forme d'une première chaîne de caractères alphanumériques. Cet identifiant peut être généré aléatoirement ou pseudo-aléatoirement à la création de la session de transaction. Cet identifiant peut aussi être généré à partir de données signifiantes et d'un index s'incrémentant de manière séquentielle.

Après association S4 de la requête de droit de transaction avec une session de droit de transaction, le serveur 2 génère S6 un droit de transaction correspondant à ladite requête et portant sur un montant maximal de transaction définie en fonction de règles de gestion pouvant impliquer (sans que cette liste soit exhaustive) :
- Le montant sur laquelle porte la requête de droit de transaction,
- Le type d'évènement ayant déclenché la requête de droit de transaction,
- Le statut de l'émetteur (par exemple défini par un scoring comportemental lié aux tentatives de fraudes passées),
- Le solde de valeur du ou des comptes associés,
- etc....

Le droit de transaction ainsi généré est identifié par un identifiant de droit de transaction déterminé à partir de l'identifiant de session de transaction, de préférence sous la forme d'une deuxième chaîne de caractères alphanumériques intégrant tout ou partie de la première chaîne de caractères alphanumériques.

L'identifiant peut contenir des indications permettant d'établir une durée de validité pour le droit de transaction. Par exemple, il peut s'agir d'une date et d'une heure d'émission, accompagnée d'une durée de validité en minutes, ou bien encore une date et une heure de péremption.

De plus, l'identifiant de droit de transaction contient, de préférence, en clair ou en crypté les informations suffisantes permettant au receveur d'identifier l'émetteur (exemple : Nom et Prénom) ainsi que les éléments qui peuvent être imposés selon le contexte d'utilisation de l'invention (par exemple nom de l'entreprise dans le contexte de titres restaurant).

En outre, l'identifiant contient, de préférence, en clair ou en crypté le montant maximal du droit de transaction, et ce éventuellement pour chacun des comptes impliqués dans la transaction (dans le cas de comptes multiples).

De préférence, l'identifiant de droit de transaction inclus également une signature, éventuellement de tous les éléments le composant, que seul le serveur 2 est apte à générer, afin de garantir l'authenticité du droit de transaction. Cette signature est générée par la mise en oeuvre de méthode de cryptographie asymétrique c'est-à-dire à clef publique, ou par toute autre méthode de sécurisation permettant d'authentifier l'identifiant de droit de transaction.

Ainsi les droits de transaction rattachés à une session de transaction peuvent être matérialisés par une chaîne de caractères alphanumériques contenant les éléments suivants :
- l'identifiant de la session de transaction sous la forme de la première chaîne de caractère,
- des éléments d'identification de l'émetteur, par exemple ses noms et prénoms,
- un montant de transaction autorisé, par exemple un nombre maximal de titre et/ou une somme maximale,
- une date et une heure d'émission dudit droit de transaction, associées à une durée de validité dudit droit de transaction ou une date et heure de péremption dudit droit de transaction,
- une signature de tout ou partie des éléments précités par un algorithme classique de cryptographie à clé publique/privée, permettant de garantir que le droit de transaction a bien été émis par la plate-forme.

Le montant maximal de transaction le plus élevé de l'ensemble des droits de transaction associés à une même session de transaction défini le montant alloué à ladite session de transaction. Le montant correspondant, en nombres de titre ou en somme, est alors bloqué sur le compte émetteur et n'est plus disponible pour une autre session de transaction, c'est-à-dire qu'il ne peut plus être utilisé que dans le cadre de la session de transaction à laquelle est associée le droit de transaction.

Le droit de transaction est ensuite transmis S8 au terminal d'émetteur 4. Le droit de transaction peut alors être stocké S10 par le terminal d'émetteur 4 afin de pouvoir être utilisé ultérieurement pendant sa période de validité. Ce stockage permet notamment d'effectuer la transaction même lorsque le terminal d'émetteur 4 n'a pas la possibilité de communiquer avec le serveur 2 au moment de la transaction.

Au moment de la transaction (par exemple au moment du paiement d'une prestation), le terminal d'émetteur 4 génère S12 un ordre de transaction à partir du droit de transaction. Le droit de transaction doit alors être encore valide. La génération de l'ordre de transaction à partir du droit de transaction a donc une durée de faisabilité qui dépend de la durée de validité dudit droit de transaction. Cet ordre de transaction est identifié par un identifiant d'ordre de transaction déterminé à partir dudit identifiant de droit de transaction.

Par exemple l'identifiant d'ordre de transaction peut incorporer tout ou partie de l'identifiant de droit de transaction. Ainsi, l'identifiant d'ordre de transaction peut être une concaténation :
- de l'identifiant de droit de transaction,
- du montant de transaction, représenté par un nombre de titres à valeur fixe et/ou une somme,
- d'éventuels autres éléments tels que des codes promotionnels.
Dans un souci de sécurité, l'identifiant d'ordre de transaction devrait contenir tout ou partie de la signature présente dans l'identifiant de session de transaction.

Il peut-être intéressant pour certains usages d'incorporer dans cet identifiant de transaction des données de géolocalisation du terminal d'émetteur 4 si celui-ci est apte à les acquérir. Il peut s'agir de données acquises au moyen d'un éventuel récepteur GPS incorporé au terminal d'émetteur 4 et/ou au moyen d'une triangulation d'un réseau de télécommunication tel que GSM ou UMTS. L'utilité de ces données de géolocalisation sera explicitée par la suite.

De préférence, l'identifiant d'ordre de transaction est une troisième chaîne de caractères alphanumériques générée à partir de la deuxième chaîne de caractères alphanumériques, par exemple contenant tout ou partie de la deuxième chaîne de caractères alphanumériques, et notamment la signature.

L'ordre de transaction est ensuite transmis S14 depuis le terminal d'émetteur 4 vers un terminal de receveur 6. La transmission dudit ordre de transaction peut être de préférence effectuée :
- par voie optique entre d'une part un écran du terminal d'émetteur 4, affichant un motif dans lequel est encodé l'identifiant de l'ordre de transaction et d'autre part un dispositif d'acquisition d'images 14 du terminal de receveur 6, ainsi qu'illustré par la figure 1. Le motif peut être un code barre 2D, par exemple un code QR ou Datamatrix. Le terminal de receveur 6 reçoit alors l'ordre de transaction, par exemple en scannant le motif affiché sur l'écran du terminal d'émetteur 4 au moyen du dispositif d'acquisition d'images qui être une caméra incorporée audit terminal de receveur 6 ou un scanner. Le terminal de receveur 6 peut ainsi prendre la forme d'un téléphone mobile intelligent munie d'un appareil photographique ou d'une caméra, ou bien encore d'un système de caisse muni d'un scanner.
- par voie électromagnétique en communication en champ proche (NFC) entre des puces NFC respectives du terminal d'émetteur 4 et du terminal de receveur 6. Dans ce cas, le terminal d'émetteur 4 envoie un signal contenant l'identifiant d'ordre de transaction à destination du terminal de receveur 6. Dans ce cas, le terminal de receveur 6 peut transmettre au terminal d'émetteur 4 un message de retour indiquant la bonne réception de la transaction.

Le terminal de receveur 6 vérifie S30 alors la validité de l'ordre de transaction au moyen des éléments de sécurisation contenue dans l'identifiant de l'ordre de transaction. Ces éléments de sécurisation peuvent être :
- tout ou partie de la signature de l'identifiant de droit de transaction reprise dans l'identifiant d'ordre de transaction,
- le respect du montant maximal de transaction que le montant de la transaction ne doit pas dépasser,
- la validité temporelle de l'ordre de transaction par exemple en comparant la date et l'heure d'émission, ainsi que la durée de validité, à la date et l'heure de réception de l'ordre de transaction.
Le terminal de receveur 6 accepte alors l'ordre de transaction s'il le détermine valide, ou au contraire affiche un écran indiquant que l'ordre de transaction est invalide et interrompt la transaction.

Si le terminal de receveur 6 ne peut pas communiquer avec le serveur 2 (mode "offline"), une information identifiant l'émetteur est lue à partir de l'ordre de transaction par le terminal de receveur 6. Le receveur est alors invité à vérifier la conformité de l'identité de l'émetteur avec l'identité de l'émetteur contenue dans l'ordre de transaction. Le receveur peut alors valider ou non l'ordre de transaction au moyen d'un dispositif d'entrée du terminal de receveur 6, par exemple en cliquant sur une fenêtre de validation affichée sur l'écran du terminal de receveur. L'ordre de transaction est alors stocké dans une mémoire associée au terminal de receveur 6 pour être transmis ultérieurement au serveur 2 lorsque le terminal de receveur 6 pourra communiquer avec le serveur 2.

Si le terminal de receveur 6 peut communiquer avec le serveur 2 (mode "on-line"), par exemple au moyen d'une connexion internet, le terminal de receveur 6 transmet S32 l'ordre de transaction au serveur 2. Le serveur 2 peut alors confirmer la validité de l'ordre de transaction. En outre, les éventuels ordres de transaction stockés dans le terminal de receveur 6 résultants de paiements précédents et non encore transmis sont alors transmis.

Après réception d'un ordre de transaction en provenance d'un terminal de receveur 6, le serveur 2 s'assure éventuellement de la validité dudit ordre de transaction à partir des (ou d'une partie des) éléments de sécurité inclus dans l'identifiant d'ordre de transaction (tels que la signature) et de contrôles internes aux bases de données du serveur (tels que l'approvisionnement du ou des comptes associés, l'existence de l'identifiant de transaction etc...).

Si l'ordre de transaction provenant d'un terminal de receveur 6 est validé, le serveur 2 enregistre S34 la transaction comme dénouée en vue de la réalisation d'une compensation financière lorsqu'elle est prévue, qui peut être ultérieure dans le cas d'une transaction impliquant un transfert de valeur. Le transfert de valeur correspondant à la transaction est dès lors effectué, mais la compensation peut être effectuée avec une périodicité suffisante (par exemple de façon bimensuelle) et un éventuel regroupement de plusieurs transactions, pour en alléger les coûts. Cet enregistrement peut prendre plusieurs formes selon le contexte d'utilisation de l'invention :
- dans le cas de l'exemple pour des titres de paiement : changement du statut des titres enregistrés sur le serveur,
- dans le cas de l'exemple de paiement financier : enregistrement d'un mouvement d'un compte associé à l'émetteur à un compte associé au receveur.
Dans le cas d'un échange de biens ou services en contrepartie d'un titre donnant droit à ce bien ou service, la transaction est simplement enregistrée comme dénouée, et l'ordre de transaction indique au receveur qu'il doit fournir à l'émetteur le bien ou le service en question.

Concomitamment, la session de transaction à laquelle est associé ledit ordre de transaction est alors liquidée par le serveur 2, impliquant tout ou partie des évènements suivants :
- changement de statut de cette session de transaction
- déblocage du solde éventuel du montant maximal de transaction (qui avait été bloqué lors de la génération des droits de transaction) auquel est soustrait le montant de transaction (c'est-à-dire que ce solde est rendu disponible au niveau du compte émetteur pour une autre session de transaction.)

A la suite d'une transmission S14 d'un ordre de transaction depuis un terminal d'émetteur 4 vers un terminal de receveur 6, le terminal d'émetteur 4 transmet S20 ledit ordre de transaction au serveur 2 dès qu'il lui est possible de communiquer avec celui-ci.

A la réception d'un ordre de transaction en provenance d'un terminal d'émetteur 4, le serveur 2 ferme S22 la session de transaction à laquelle est associé ledit ordre de transaction, si ladite session n'est pas liquidée, c'est-à-dire si le serveur 2 n'a pas encore reçu ledit ordre de transaction depuis un terminal de receveur 6. La session de transaction est dès lors fermée.

La fermeture de la session de transaction entraîne l'impossibilité de générer de nouveaux droits de transaction associés à ladite session de transaction. De plus, le blocage du montant maximal de transaction qui avait été bloqué lors de la génération de l'ensemble des droits de transaction associés à ladite session de transaction persiste, c'est-à-dire que ce montant n'est plus disponible au niveau du compte émetteur pour être associé avec une autre session de transaction.

La session de transaction n'est alors plus ouverte et une requête de droit de transaction émise par le terminal d'émetteur 4 entraînera l'ouverture d'une nouvelle session de transaction.

Au bout d'un délai déterminé, typiquement de quelques heures, si la session reste fermée sans avoir été liquidée, c'est-à-dire sans que le serveur 2 ait reçu un ordre de transaction associée à ladite session transmis par un terminal de receveur 6, celle-ci est considérée comme expirée. La transaction est alors annulée sans être dénouée, par exemple sans qu'un transfert de valeur ait eu lieu, et la session de transaction est liquidée. La transaction en réponse à une interaction entre le terminal de receveur 6 et le serveur 2 sur la base de l'ordre de transaction a donc une durée de faisabilité.

Un mode de réalisation alternatif permet de s'affranchir de la nécessité d'un terminal d'émetteur 4 mobile. Dans ce mode de réalisation, à partir d'un terminal d'émetteur 4 prenant la forme d'un ordinateur muni de moyens de communication avec le serveur 2, par exemple une connexion internet, les étapes du procédé détaillées ci-dessus sont reprises, à l'exception de l'étape de transmission des ordres de transaction au terminal de receveur 6.

Les ordres de transaction étant générés par l'ordinateur, c'est-à-dire le terminal d'émetteur 4, le porteur peut imprimer les identifiants d'ordres de transaction, notamment sous la forme de code 2D, sur papier.

Au moment du paiement, les identifiants d'ordre de transaction sont acquis par le terminal de receveur 6 de la même façon que s'ils étaient affichés sur un écran d'un terminal d'émetteur 4. Les autres étapes sont les mêmes que décrites précédemment.
Ainsi, l'ordre de transaction est transmis au terminal de receveur 6 au moyen d'identifiants matérialisés, en l'occurrence sur papier.
Cependant, la durée de validité des ordres de transaction est alors choisie sensiblement plus longue (typiquement quelques jours), de sorte que la matérialisation des identifiants de transaction puisse être décalée dans le temps par rapport à leurs utilisations.

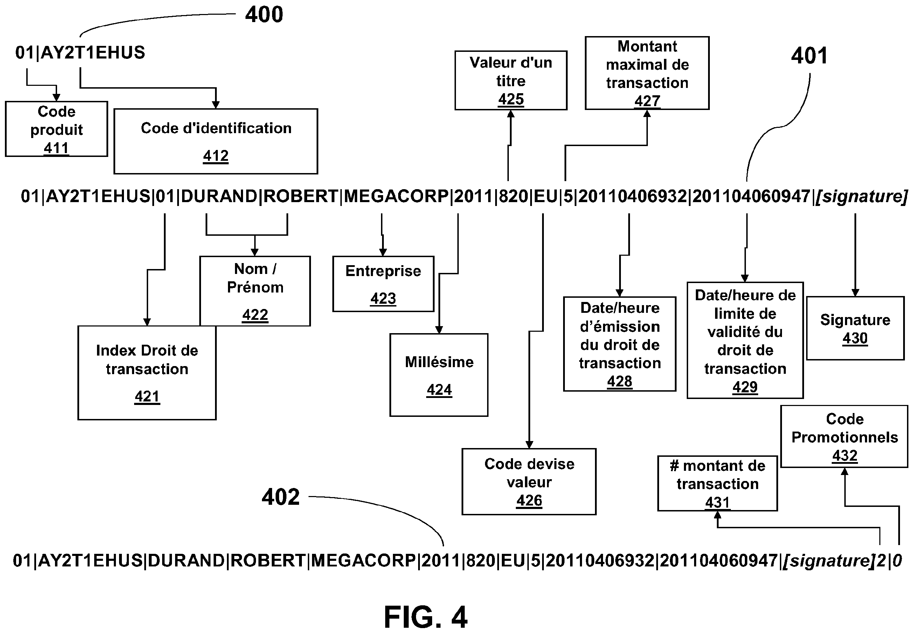

La figure 4 illustre des exemples d'identifiants qui peuvent être utilisés dans le cadre de l'invention, dans le cas de transaction au moyen d'un titre de paiement valant 8,20€.
Ainsi, un identifiant 400 de session de transaction peut être obtenu par la concaténation d'un code produit 411 et d'un code d'indentification 412 généré de manière séquentielle, pseudo-aléatoire ou aléatoire.
Un identifiant 401 de droit de transaction peut être obtenu par la concaténation dudit identifiant 400 de session de transaction, et :
- d'un index de droit de transaction 421 (01 dans cet exemple),
- des noms et prénoms 422 de l'émetteur (Durand Robert dans cet exemple),
- du nom de l'entreprise 423 (Megacorp dans cet exemple),
- du millésime 424 dans le cas de titres de paiement périssables, c'est à dire de l'année des titres de paiement afin d'en apprécier la non péremption (2011 dans cet exemple),
- d'une valeur unitaire d'un titre 425 (820 dans cet exemple),
- d'un code devise 426 pour la valeur unitaire 425 (EU pour Euro dans cet exemple),
- d'un montant maximal de transaction 427 (5 titres dans cet exemple),
- d'une date et heure d'émission 428 du droit de transaction (2011046932 pour le 6 avril 2011 à 9:32 dans cet exemple),
- d'une date et heure de validité 428 du droit de transaction (2011046947 pour le 6 avril 2011 à 9:47, soit 15 minutes de validité dans cet exemple),
- d'une signature 430 afin d'authentifier les éléments précédents.

Un identifiant 402 d'ordre de transaction peut être obtenu par la concaténation dudit identifiant 401 de droit de transaction, et:
- d'un montant de transaction 431 (2 titres dans cet exemple),
- d'un code promotionnel 432 (0 dans cet exemple).

Ces exemples sont donnés à titre uniquement indicatifs. Par exemple, d'autres éléments peuvent être ajoutés ou enlevées aux identifiants, et ceux-ci ne doivent pas nécessairement reprendre l'intégralité des identifiants à partir desquels ils sont générés. Ainsi, d'autres données peuvent être prises en compte.

Lors de la transmission des ordres de transaction au serveur (du terminal d'émetteur 4 et/ou du terminal de receveur 6), d'autres informations peuvent être remontées pour augmenter la traçabilité de la transaction et limiter les risques de fraudes.

Par exemple, les données de géolocalisation des terminaux peuvent également être remontées au serveur 2 par le terminal d'émetteur 4 et/ou le terminal de receveur 6 en même temps que la transmission de l'ordre de transaction au serveur 2 pour fournir des informations de traçabilité pour aider à une enquête ultérieure en cas de fraude suspectée.

Les données de géolocalisation du terminal de receveur 6 peuvent être fixes et associées au receveur au niveau du serveur 2, ou bien être remontées au serveur 2 au moment de l'envoi par le terminal de receveur de l'ordre de transaction.

Dans un mode de réalisation alternatif, l'ordre de transaction peut être généré dans le terminal d'émetteur 4 à partir du droit de transaction disponible sur celui-ci et d'une information de transaction, contenant notamment le montant de la transaction et un identifiant de receveur, transmis depuis le terminal de receveur 6 vers le terminal d'émetteur 4, de la même façon que préalablement décrit.

Dans ce mode de réalisation alternatif, l'authentification de l'ordre de transaction est faite par le terminal d'émetteur 4 à partir du contenu de l'ordre de transaction, par exemple une vérification de la signature du receveur transmis par le terminal de receveur 6 au terminal d'émetteur 4.

Le terminal d'émetteur 4 peut alors par exemple afficher un message de validation après avoir authentifié l'ordre de transaction, et s'être notamment assuré du fait que le montant de la transaction ne dépasse pas le montant maximal de transaction. Le message est de préférence un message visuel de validation affichant le prix de la transaction. Le message de validation a pour but à la fois de permettre au receveur de s'assurer que la transaction est autorisée, plus spécialement que le montant de la transaction n'excède pas le montant autorisé, tandis que l'émetteur s'assure du montant de la transaction et de la correcte affiliation du receveur au service.

Les étapes subséquentes de traitement restent les mêmes, à l'exception du fait qu'elles sont menées entre le terminal d'émetteur 4 et le serveur 2 afin d'aboutir à la réalisation de l'opération de dénouement.

Pour en revenir au mode de réalisation initial, les figures 3a, 3b et 3c illustrent un exemple d'opérations dans les éléments constituant le système selon l'invention lorsqu'un procédé selon l'invention est mis en oeuvre.

Dans l'exemple illustré par la figure 3a et illustrant les opérations relatives à un terminal d'émetteur 4, au lancement 100 de l'application, une vérification 102 de la validité d'éventuels droits de transaction est automatiquement effectuée par le terminal d'émetteur 4. S'il n'y a pas de droits de transaction valides, une connexion 104 avec le serveur 2 est automatiquement tentée afin de transmettre 106 audit serveur 2 une requête de droit de transaction. Cette automaticité de la requête n'est pas nécessaire mais apporte plus de confort à l'utilisateur. Une telle requête peut porter sur un droit de transaction de base d'un montant prédéterminé.

S'il existe des droits de transaction valides, si la connexion avec le serveur ne peut être établie, ou après réception d'un droit de transaction, l'écran d'accueil est affiché 108. L'écran d'accueil peut aussi être affiché dès le lancement de l'application pour améliorer le confort de l'utilisateur, les opérations précédentes étant alors effectuées en tâche de fond.

L'émetteur définit alors le montant de transaction souhaité 110 et clique alors 120 sur "présenter le code" par exemple. Une tentative 124 de connexion avec le serveur 2 est alors effectuée, éventuellement précédée d'un test de connexion. En cas de connexion réussie avec le serveur 2, une requête de droit de transaction est envoyée 126 au serveur 2. Si le terminal d'émetteur 4 reçoit une réponse du serveur 2 contenant les droits de transaction demandés, un ordre de transaction est généré 136 à partir du droit de transaction reçu, et le motif est affiché 138.

Si le terminal ne reçoit pas de réponse du serveur 2, ou si la tentative de connexion 124 échoue, alors un ordre de transaction est généré 136 à partir des droits de transaction valides disponibles sur le terminal d'émetteur 4. Si les droits de transaction disponibles sont insuffisants (comparativement au montant sélectionné 110 par l'émetteur), un message d'erreur est affiché.

Si la génération de l'ordre de transaction s'est bien déroulée, un motif encodant ledit ordre de transaction est affiché 138, au moyen du codage par un code barre 2D de l'identifiant de l'ordre de transaction.
Le terminal d'émetteur se reconnecte 140 alors au serveur 2 pour lui transmettre ledit ordre de transaction (ainsi qu'éventuellement d'autres informations telles que géolocalisations, heure de transaction, ...).

Si le serveur répond 142 que la transaction est validée, le terminal d'émetteur 4 affiche 144 un message informant que la transaction est validée. Si le serveur 2 répond 142 que la transaction est en attente ou ne répond pas, le terminal d'émetteur 4 affiche 146 un message informant que la transaction est en attente de validation.

La figure 3b illustre les opérations relatives au serveur 2 dans un exemple de mise en oeuvre d'un procédé selon l'invention. La réception 200 d'une requête de droit de transaction entraîne un test 202 d'identification du terminal d'émetteur 4 à l'origine de ladite requête. Si le terminal d'émetteur est inconnu, une procédure d'erreur est alors mise en oeuvre 206.

Une fois le terminal d'émetteur 4 identifié, le serveur détermine 204 si une session de transaction associée à cet émetteur est ouverte. S'il n'y a pas de session de transaction ouverte, le serveur 2 en ouvre 212 une. S'il existe déjà une session de transaction, le serveur 2 génère 214 directement un droit de transaction et envoie 216 celui-ci au terminal d'émetteur 4.

A la réception 230 d'un ordre de transaction depuis un terminal receveur 6, un test de validité est effectué 232 sur ledit ordre de transaction. Si l'ordre de transaction n'est pas valide, une procédure d'erreur 224 est lancée. Si l'ordre de transaction est valide, la session de transaction à laquelle est associé ledit ordre de transaction est validée 234, autrement dit fermée, puis liquidée 235.

A la réception 220 d'un ordre de transaction transmis par un terminal d'émetteur 4, un test de validité est effectué 222 sur ledit ordre de transaction. Si l'ordre de transaction n'est pas valide, une procédure d'erreur 224 est lancée. Si l'ordre de transaction est valide, un test est effectué 240 sur la session de transaction à laquelle est associée ledit ordre de transaction pour déterminer si la session de transaction a été validée par le receveur. Si ladite session n'a pas été validée par le receveur, c'est-à-dire si elle n'a pas été liquidée, un message indiquant que la session de transaction est "en attente" est envoyé 242 au terminal d'émetteur 4 et l'ordre de transaction prend alors le statut « en attente » 248.

Si la session de transaction a déjà été validée par un receveur, ledit ordre de transaction associée à ladite session de transaction a déjà été reçu 230 par le serveur 2 et liquidée 235, un message de validation contenant l'identification du receveur est envoyé 244 au terminal d'émetteur 4. La transaction est alors dénouée et la session de transaction est alors validée 246.

La figure 3c illustre les opérations relatives au terminal de receveur 6 dans un exemple de mise en oeuvre d'un procédé selon l'invention.

Au lancement 300 d'une application dédiée, le terminal de receveur transmet 302 les ordres de transactions enregistrés, résultant de transactions antérieures dont les ordres de transaction n'ont pas été envoyés au serveur 2.

Si le serveur 2 répond 304, les ordres de transactions transférés sont supprimés 306 de la mémoire du terminal de receveur 6. En l'absence de réponse du serveur 2, ou après la suppression 306 des ordres de transactions transférés, l'écran d'accueil est affiché 308.

Au moment d'une transaction, un ordre de transaction est acquis 310 par le terminal de receveur 6. Un test de validité est alors effectué 312. Si l'ordre de transaction n'est pas valide, un écran "ordre de transaction invalide" est affiché 314.

Si l'ordre de transaction est valide, le terminal de receveur 6 se connecte 316 au serveur 2 pour transférer l'ordre de transaction. La réponse du serveur 2 est alors analysée 318.

En l'absence de réponse, un écran "scan offline" est affiché 320 et l'ordre de transaction est enregistré 322 pour un transfert ultérieur du terminal de receveur 6 au serveur 2. Le receveur utilisateur du terminal de receveur peut alors être invité à suivre une procédure supplémentaire, telle qu'une vérification de l'identité de l'émetteur, grâce aux informations d'identification signées contenues dans l'ordre de transaction.

Si le serveur 2 répond que l'ordre de transaction est invalide, par exemple en raison de l'invalidité des titres sur lequel il porte, un écran "titres invalides" est affiché 326.

Si la transaction est validée, c'est-à-dire que l'ordre de transaction est validé, ainsi que les éventuelles offres promotionnelles associées, un écran "scan on-line" est affiché 324, indiquant par là que le dénouement de la transaction correspondant à l'ordre de transaction est effectué.

## Revendications

1. Procédé sécurisé de transaction dématérialisée mettant en jeu un serveur (2), un terminal d'émetteur d'une valeur (4) et un terminal (6) de receveur de cette valeur, dans lequel :
- une requête de droit de transaction est envoyée depuis le terminal d'émetteur (4) vers le serveur (2),
- un droit de transaction, correspondant à ladite requête et portant sur un montant maximal de transaction, est sélectivement généré par le serveur (2) en fonction de règles et transmis au terminal d'émetteur (4), ledit droit de transaction étant identifié par un identifiant de droit de transaction,
- un ordre de transaction, contenant des informations permettant d'authentifier le droit de transaction et des informations représentatives de la valeur de transaction, est généré par le terminal d'émetteur (4), ledit ordre de transaction étant identifié par un identifiant d'ordre de transaction déterminé à partir de l'identifiant de droit de transaction,
dans lequel au moins un des terminaux (4, 6) vérifie l'authenticité du droit de transaction à partir du contenu de l'ordre de transaction,
**caractérisé en ce que**:
soit l'ordre de transaction est généré par le terminal d'émetteur (4) puis transmis au terminal de receveur (6) et l'identifiant de droit de transaction contenu dans l'ordre de transaction contient une information identifiant l'émetteur, et l'authenticité du droit de transaction est vérifiée par le terminal de receveur (6) à partir d'éléments de sécurisation contenus dans l'identifiant de l'ordre de transaction déterminé à partir de l'identifiant de droit de transaction, puis si le terminal de receveur (6) peut interagir avec le serveur, une opération de dénouement de la transaction est effectuée en réponse à une interaction entre le terminal de receveur (6) et le serveur (2), ladite interaction comprenant la transmission par le terminal de receveur (6) au serveur (2) de l'ordre de transaction, et sinon, en absence d'interaction entre le terminal de receveur (6) et le serveur (2):
- l'ordre de transaction est mémorisé dans le terminal de receveur (6),
- l'information identifiant l'émetteur est lue à partir de l'ordre de transaction par le terminal de receveur (6), de manière à permettre une vérification d'identité de l'émetteur,
- sur la base de l'identité de l'émetteur contenue dans l'ordre de transaction, l'ordre de transaction est validé ou non au moyen d'un dispositif d'entrée du terminal de receveur (6) pour interaction ultérieure,
- l'opération de dénouement de la transaction est effectuée en réponse à une interaction ultérieure entre le terminal de receveur (6) et le serveur (2) sur la base de l'ordre de transaction;
soit l'ordre de transaction est généré par le terminal d'émetteur (4) à partir du droit de transaction disponible sur ledit terminal d'émetteur (4) et d'une information de transaction, contenant le montant de la transaction et un identifiant de receveur, transmis depuis le terminal de receveur (6) vers le terminal d'émetteur (4), l'ordre de transaction contient une information identifiant le receveur, et l'authenticité du droit de transaction est vérifiée par le terminal d'émetteur (4) à partir du contenu de l'ordre de transaction, puis
si le terminal d'émetteur (4) peut interagir avec le serveur, et si le terminal d'émetteur (4) interagit avec le serveur, une opération de dénouement de la transaction est effectuée en réponse à une interaction entre le terminal d'émetteur (4) et le serveur (2), ladite interaction comprenant la transmission par le terminal d'émetteur (4) au serveur (2) de l'ordre de transaction, et sinon,
en absence d'interaction entre le terminal d'émetteur (4) et le serveur (2):
- l'ordre de transaction est mémorisé dans le terminal d'émetteur (4),
- l'information identifiant le receveur est lue à partir de l'ordre de transaction par le terminal d'émetteur (4), de manière à permettre une vérification d'identité du receveur,
- sur la base de l'identité du receveur contenue dans l'ordre de transaction, l'ordre de transaction est validé ou non au moyen d'un dispositif d'entrée du terminal d'émetteur (4) pour interaction ultérieure,
- l'opération de dénouement de la transaction est effectuée en réponse à une interaction ultérieure entre le terminal d'émetteur (4) et le serveur (2) sur la base de l'ordre de transaction.

2. Procédé selon la revendication 1, dans lequel les informations permettant d'authentifier le droit de transaction comprennent une signature numérique.

3. Procédé selon l'une quelconque des revendications précédentes, dans lequel au moins une étape du procédé a une durée de faisabilité.

4. Procédé selon l'une quelconque des revendications précédentes, dans lequel le droit de transaction comporte une date et une heure d'émission à partir desquels est déterminée une durée de validité.

5. Procédé selon l'une quelconque des revendications précédentes, dans lequel le montant maximal de transaction sur lequel porte le droit de transaction est bloqué au niveau du serveur (2) jusqu'à la transmission par le terminal de receveur (6) au serveur (2) de l'ordre de transaction ou jusqu'à expiration d'un délai.

6. Procédé selon la revendication 5, dans lequel la transmission depuis le terminal d'émetteur (4) vers le terminal de receveur (6) est effectuée par voie optique au moyen d'un motif (12) dans lequel est encodé le contenu de la transmission et un dispositif d'acquisition d'images (14) du terminal de receveur (6).

7. Procédé selon la revendication précédente, dans lequel le motif (12) est affiché par un écran du terminal d'émetteur (4) et acquis par le dispositif d'acquisition d'images (14) du terminal de receveur (6) ou le procédé comprend l'impression du motif (12) pour lecture par le dispositif d'acquisition d'images (14), évitant ainsi le besoin de la présence du terminal d'émetteur (4) pour la transmission au moment de la lecture.

8. Procédé selon la revendication 5, dans lequel la transmission depuis le terminal d'émetteur (4) vers le terminal de receveur (6) est effectuée par voie électromagnétique.

9. Procédé selon la revendication précédente, dans lequel la transmission est effectuée par communication en champ proche (NFC en terminologie anglo-saxonne).

10. Procédé selon l'une quelconque des revendications précédentes, dans lequel les règles à partir desquelles est généré le droit de transaction comprennent le statut de la session de transaction à laquelle est associée la requête de droit de transaction, ladite session de transaction étant apte à prendre deux statuts :
- le premier statut, dit ouvert, permettant de générer des droits de transaction associés à ladite session et correspondants à des requêtes de transaction associées à ladite session,
- le second statut, dit fermé, interdisant de générer des droits de transaction associés à ladite session et s'associer des requêtes de droit de transaction à ladite session.

11. Procédé selon la revendication précédente dans lequel, pour un même émetteur, une seule session de transaction peut avoir le premier statut.

12. Procédé selon l'une quelconque des revendications 10 ou 11, dans lequel la session de transaction passe du premier statut au second statut en réponse à la transmission par le terminal d'émetteur (4) au serveur (2) de l'ordre de transaction.

13. Procédé selon l'une quelconque des revendications 10 à 12, dans lequel la session de transaction passe du premier statut au second statut à l'expiration d'un délai prédéterminé.

14. Procédé selon l'une quelconque des revendications 10 à 13, dans lequel :
- la session de transaction est identifiée par un identifiant de session de transaction prenant la forme d'une première chaîne de caractères alphanumériques,
- le droit de transaction est identifié par l'identifiant de droit de transaction prenant la forme d'une deuxième chaîne de caractères alphanumériques générée à partir de la première chaîne de caractères alphanumériques,
- l'ordre de transaction est identifié par un identifiant d'ordre de transaction prenant la forme d'une troisième chaîne de caractères alphanumériques générée à partir de la deuxième chaîne de caractères alphanumériques.

15. Procédé selon l'une quelconque des revendications précédentes, dans lequel le serveur (2) prend en compte des données de géolocatisation du terminal d'émetteur (4) et/ou du terminal de receveur (6).

16. Système sécurisé de transaction dématérialisée comprenant :
- un serveur (2) informatique,
- un terminal d'émetteur (4) adapté pour communiquer avec ledit serveur,
- un terminal de receveur (6) adapté pour communiquer avec ledit serveur, dans lequel le terminal d'émetteur (4) et le terminal de receveur (6) comprennent des moyens permettant la transmission de l'un vers l'autre d'un ordre de transaction, le système étant **caractérisé en ce qu'**il est configuré pour mettre en oeuvre le procédé selon l'une quelconque des revendications 1 à 15.

## Patentansprüche

1. Gesichertes Verfahren für dematerialisierte Transaktion mit einem Server (2), einem Sendeterminal eines Wertes (4) und einem Empfängerterminal (6) dieses Wertes, wobei:
- eine Transaktionsberechtigungsanfrage vom Sendeterminal (4) an den Server (2) geschickt wird,
- eine Transaktionsberechtigung, die der Anfrage entspricht und sich auf den Transaktionshöchstbetrag bezieht, vom Server (2) selektiv gemäß den Regeln erzeugt und an das Sendeterminal (4) geschickt wird, wobei die Transaktionsberechtigung von einem Identifikator der Transaktionsberechtigung identifiziert wird,
- ein Transaktionsauftrag, der Daten umfasst, mit denen die Transaktionsberechtigung authentifiziert werden kann, und repräsentative Daten zum Wert der Transaktion vom Sendeterminal (4) erzeugt wird, wobei der Transaktionsauftrag von einem Identifikator des Transaktionsauftrags identifiziert wird, der ausgehend vom Identifikator der Transaktionsberechtigung bestimmt wird,
wobei zumindest eines der Terminals (4, 6) die Authentizität der Transaktionsberechtigung ausgehend vom Inhalt des Transaktionsauftrags überprüft,
**dadurch gekennzeichnet, dass**:
Entweder der Transaktionsauftrag vom Sendeterminal (4) erzeugt und dann an das Empfängerterminal (6) übermittelt wird und der im Transaktionsauftrag enthaltene Identifikator der Transaktionsberechtigung eine Information enthält, die den Sender identifiziert, und die Authentizität der Transaktionsberechtigung vom Empfängerterminal (6) anhand von im Identifikator des Transaktionsauftrags enthaltenen Sicherungselementen überprüft wird, der anhand des Identifikators der Transaktionsberechtigung bestimmt wird, und wenn dann das Empfängerterminal (6) mit dem Server austauschen kann, in Reaktion auf einen Austausch zwischen dem Empfängerterminal (6) und dem Server (2) ein Auflösungsvorgang der Transaktion durchgeführt wird, wobei der Austausch die Übermittlung des Transaktionsauftrags durch das Empfängerterminal (6) an den Server (2) umfasst, andernfalls bei fehlendem Austausch zwischen dem Empfängerterminal (6) und dem Server (2):
- der Transaktionsauftrag im Empfängerterminal (6) gespeichert wird,
- die den Sender identifizierende Information ab dem Transaktionsauftrag durch das Empfängerterminal (6) gelesen wird, so dass eine Überprüfung der Identität des Senders möglich wird,
- und zwar auf der Grundlage der im Transaktionsauftrag enthaltenen Identität des Senders der Transaktionsauftrag vermittels einer Eingabevorrichtung des Empfängerterminals (6) für späteren Austausch bestätigt wird oder nicht,
- der Auflösungsvorgang der Transaktion in Reaktion auf einen späteren Austausch zwischen dem Empfängerterminal (6) und dem Server (2) auf der Grundlage des Transaktionsauftrags vorgenommen wird;
Oder der Transaktionsauftrag vom Sendeterminal (4) ab der auf dem Sendeterminal (4) verfügbaren Transaktionsberechtigung und einer Transaktionsinformation erzeugt wird, die den Betrag der Transaktion und einen Identifikator des Empfängers enthält, der vom Empfängerterminal (6) zum Sendeterminal (4) übermittelt wird, der Transaktionsauftrag eine den Empfänger identifizierende Information enthält, und die Authentizität der Transaktionsberechtigung vom Sendeterminal (4) ab dem Inhalt des Transaktionsauftrags überprüft wird, und dann, wenn das Sendeterminal (4) mit dem Server austauschen kann, und wenn das Sendeterminal (4) mit dem Server austauscht, in Antwort auf einen Austausch zwischen dem Sendeterminal (4) und dem Server (2) ein Auflösungsvorgang der Transaktion durchgeführt wird, wobei der Austausch die Übertragung des Transaktionsauftrags durch das Sendeterminal (4) an den Server (2) umfasst, und andernfalls bei fehlendem Austausch zwischen dem Sendeterminal (4) und dem Server (2):
- der Transaktionsauftrag im Sendeterminal (4) gespeichert wird,
- die den Empfänger identifizierende Information ab dem Transaktionsauftrag durch das Sendeterminal (4) gelesen wird, so dass eine Überprüfung der Identität des Empfängers möglich wird,
- und zwar auf der Grundlage der im Transaktionsauftrag enthaltenen Identität des Empfängers der Transaktionsauftrag vermittels einer Eingabevorrichtung des Sendeterminals (4) für späteren Austausch bestätigt wird oder nicht,
- der Auflösungsvorgang der Transaktion in Reaktion auf einen späteren Austausch zwischen dem Sendeterminal (4) und dem Server (2) auf der Grundlage des Transaktionsauftrags vorgenommen wird.

2. Verfahren nach Anspruch 1, wobei die die Transaktionsberechtigung authentifizierenden Informationen eine digitale Unterschrift umfassen.

3. Verfahren nach einem beliebigen der vorstehenden Ansprüche, wobei zumindest ein Schritt des Verfahrens eine Machbarkeitsdauer hat.

4. Verfahren nach einem beliebigen der vorstehenden Ansprüche, wobei die Transaktionsberechtigung ein Sendedatum und eine Sendeuhrzeit umfasst, von denen ausgehend eine Gültigkeitsdauer bestimmt wird.

5. Verfahren nach einem beliebigen der vorstehenden Ansprüche, wobei der Transaktionshöchstbetrag, auf den sich die Transaktionsberechtigung bezieht, im Server (2) gesperrt wird, bis das Empfängerterminal (6) den Transaktionsauftrag an den Server (2) überträgt, oder bis zum Ablauf einer Frist.

6. Verfahren nach Anspruch 5, wobei die Übertragung vom Sendeterminal (4) zum Empfängerterminal (6) auf optischem Wege vermittels eines Motivs (12) erfolgt, in dem der Inhalt der Übertragung und eine Bilderfassungsvorrichtung (14) des Empfängerterminals (6) codiert sind.

7. Verfahren nach vorstehendem Anspruch, wobei das Motiv (12) von einem Bildschirm des Sendeterminals (4) angezeigt und von der Bilderfassungsvorrichtung (14) des Empfängerterminals (6) erfasst wird, oder das Verfahren umfasst den Ausdruck des Motivs (12) zum Lesen durch die Bilderfassungsvorrichtung (14), was somit die Notwendigkeit der Anwesenheit des Sendeterminals (4) für die Übertragung im Moment des Lesens vermeidet.

8. Verfahren nach Anspruch 5, wobei die Übertragung vom Sendeterminal (4) zum Empfängerterminal (6) auf elektromagnetischem Wege erfolgt.

9. Verfahren nach vorstehendem Anspruch, wobei die Übertragung durch Nahfeldkommunikation (NFC im englischen Sprachgebrauch) erfolgt.

10. Verfahren nach einem beliebigen der vorstehenden Ansprüche, wobei die Regeln, nach denen die Transaktionsberechtigung erzeugt wird, den Status der Transaktionssitzung umfassen, die mit der Transaktionsberechtigungsanfrage verbunden ist, und die Transaktionssitzung geeignet ist, zwei Status anzunehmen:
- wobei der erste und sogenannte offene Status ermöglicht, Transaktionsberechtigungen in Verbindung mit der Sitzung zu erzeugen, und die den mit der Sitzung verbundenen Transaktionsanfragen entsprechen,
- wobei der zweite und sogenannte geschlossene Status es verbietet, Transaktionsberechtigungen in Verbindung mit der Sitzung zu erzeugen, und Transaktionsberechtigungsanfragen mit der Sitzung zu verbinden.

11. Verfahren nach vorstehendem Anspruch, wobei eine einzige Transaktionssitzung bei einem gleichen Sender den ersten Status haben kann.

12. Verfahren nach einem beliebigen der vorstehenden Ansprüche 10 oder 11, wobei die Transaktionssitzung in Reaktion auf die Übertragung des Transaktionsauftrags durch das Sendeterminal (4) zum Server (2) vom ersten Status zum zweiten Status übergeht.

13. Verfahren nach einem beliebigen der vorstehenden Ansprüche 10 bis 12, wobei die Transaktionssitzung bei Ablauf einer vorbestimmten Frist vom ersten Status zum zweiten Status übergeht.

14. Verfahren nach einem beliebigen der vorstehenden Ansprüche 10 bis 13, wobei:
- die Transaktionssitzung von einem Sitzungsidentifikator identifiziert wird, der die Form einer ersten alphanumerischen Zeichenkette annimmt,
- die Transaktionsberechtigung vom Identifikator der Transaktionsberechtigung identifiziert wird, der die Form einer alphanumerischen Zeichenkette annimmt, die ausgehend von der ersten alphanumerischen Zeichenkette erzeugt wird,
- der Transaktionsauftrag von einem Identifikator des Transaktionsauftrags identifiziert wird, der die Form einer dritten alphanumerischen Zeichenkette annimmt, die ausgehend von der zweiten alphanumerischen Zeichenkette erzeugt wird.

15. Verfahren nach einem beliebigen der vorstehenden Ansprüche, wobei der Server (2) Ortsbestimmungsdaten des Sendeterminals (4) und/oder des Empfängerterminals (6) berücksichtigt.

16. Gesichertes System für dematerialisierte Transaktion, das Folgendes umfasst:
- einen Informatik-Server (2)
- ein Sendeterminal (4), das geeignet ist, mit dem Server zu kommunizieren,
- ein Empfängerterminal (6), das geeignet ist, mit dem Server zu kommunizieren,
wobei das Sendeterminal (4) und das Empfängerterminal (6) Mittel umfassen, die die Übertragung eines Transaktionsauftrags vom einen zum anderen ermöglichen, wobei das System **dadurch gekennzeichnet ist, dass** es so konfiguriert ist, dass es das Verfahren nach einem beliebigen der vorstehenden Ansprüche 1 bis 15 einsetzt.

## Claims

1. A secure method for dematerialised transaction using a server (2), a sender terminal of a value (4) and a receiver terminal (6) of this value, wherein:
- a transaction right request is sent from the sender terminal (4) to the server (2),
- a transaction right, corresponding to said request and relating to a maximal transaction amount, is selectively generated by the server (2) as a function of rules and sent to the sender terminal (4), said transaction right being identified by a transaction right identifier,
- a transaction order, containing information for authenticating the transaction right and information representative of the transaction value, is generated by the sender terminal (4), said transaction order being identified by a transaction order identifier determined from the transaction right identifier,
wherein at least one of the terminals (4, 6) verifies the authenticity of the transaction right from the content of the transaction order,
**characterised in that**:
either the transaction order is generated by the sender terminal (4) then transmitted to the receiver terminal (6) and the transaction right identifier contained in the transaction order contains information identifying the sender, and the authenticity of the transaction right is verified by the receiver terminal (6) from security elements contained in the identifier of the transaction order determined from the transaction right identifier, then if the receiver terminal (6) can interact with the server, a conclusion operation of the transaction is conducted in response to interaction between the receiver terminal (6) and the server (2), said interaction comprising transmission by the receiver terminal (6) to the server (2) of the transaction order, and if not, in the absence of interaction between the receiver terminal (6) and the server (2):
- the transaction order is stored in the receiver terminal (6),
- the information identifying the sender is read from the transaction order by the receiver terminal (6), so as to allow identity verification of the sender,
- on the basis of the identity of the sender contained in the transaction order, the transaction order is validated or not by means of an input device of the receiver terminal (6) for later interaction,
- the conclusion operation of the transaction is conducted in response to later interaction between the receiver terminal (6) and the server (2) on the basis of the transaction order;
or the transaction order is generated by the sender terminal (4) from the transaction right available on said sender terminal (4) and from transaction information, containing the transaction amount and a receiver identifier, transmitted from the receiver terminal (6) to the sender terminal (4), the transaction order contains information identifying the receiver, and the authenticity of the transaction right is verified by the sender terminal (4) from the content of the transaction order, then if the sender terminal (4) can interact with the server, and if the sender terminal (4) interacts with the server, a conclusion operation of the transaction is conducted in response to interaction between the sender terminal (4) and the server (2), said interaction comprising transmission by the sender terminal (4) to the server (2) of the transaction order, and if not, in the absence of interaction between the sender terminal (4) and the server (2):
- the transaction order is stored in the receiver terminal (4),
- the information identifying the sender is read from the transaction order by the receiver terminal (6), so as to allow identity verification of the sender,
- of the basis of the identity of the receiver contained in the transaction order, the transaction order is validated or not by means of an input device of the sender terminal (4) for later interaction,
- the conclusion operation of the transaction is conducted in response to interaction between the sender terminal (4) and the server (2) on the basis of the transaction order.

2. The method according to claim 1, wherein the information for authenticating the transaction right comprises a digital signature.

3. The method according to any one of the preceding claims, wherein at least one step of the method has a feasibility period.

4. The method according to any one of the preceding claims, wherein the transaction right comprises a date and time of sending from which a validity period is determined.

5. The method according to any one of the preceding claims, wherein the maximal transaction amount to which the transaction right relates is blocked at the level of the server (2) until transmission by the receiver terminal (6) to the server (2) of the transaction order or until expiration of a deadline.

6. The method according to claim 5, wherein the transmission from the sender terminal (4) to the receiver terminal (6) is performed optically by means of a pattern (12) wherein is encoded the content of the transmission and an image acquisition device (14) of the receiver terminal (6).

7. The method according to the preceding claim, wherein the pattern (12) is displayed by a screen of the sender terminal (4) and acquired by the image acquisition device (14) of the receiver terminal (6) or the method comprises printing of the pattern (12) for reading by the image acquisition device (14), avoiding the need of the presence of the sender terminal (4) for the transmission at the time of reading.

8. The method according to claim 5, wherein the transmission from the sender terminal (4) to the receiver terminal (6) is performed electromagnetically.

9. The method according to the preceding claim, wherein the transmission is performed by near field communication (NFC).

10. The method according to any one of the preceding claims, wherein the rules from which the transaction right is generated comprise the status of a transaction session to which is associated the transaction right request, said transaction session being capable of taking two statuses:
- the first status, said open, allowing generating transaction rights associated with said session and corresponding to transaction requests associated with said session,
- the second status, said closed, prohibiting generating transaction rights associated with said session and associating transaction right requests with said session.

11. The method according to the preceding claim, wherein for the same sender a single transaction session can have the first status.

12. The method according to any one of claims 10 or 11, wherein the transaction session moves from the first status to the second status in response to the transmission by the sender terminal (4) to the server (2) of the transaction order.

13. The method according to any one of claims 10 to 12, wherein the transaction session moves from the first status to the second status on expiration of a predetermined period.

14. The method according to any one of claims 10 to 13, wherein:
- the transaction session is identified by a transaction session identifier taking the form of a first string of alphanumeric characters,
- the transaction right is identified by the transaction right identifier taking the form of a second string of alphanumeric characters generated from the first string of alphanumeric characters,
- the transaction order is identified by a transaction order identifier taking the form of a third string of alphanumeric characters generated from the second string of alphanumeric characters.

15. The method according to any one of the preceding claims, wherein the server (2) takes into account geolocation data of the sender terminal (4) and/or of the receiver terminal (6).

16. A secure system for dematerialised transaction comprising:
- a computer server (2),
- a sender terminal (4) adapted to communicate with said server,
- a receiver terminal (6) adapted to communicate with said server,
wherein the sender terminal (4) and the receiver terminal (6) comprise means for transmission from one to the other of a transaction order, the system being **characterised in that** it is configured to execute the method according to any one of claims 1 to 15.
